(19) Europäisches Patentamt
European Patent Office
Office européen des brevets

(11) Publication number: 0 164 422 A1

# (12) EUROPEAN PATENT APPLICATION

(21) Application number: 84103688.2

(22) Date of filing: 04.04.84

(51) Int. Cl.4: A 01 N 47/30
A 01 N 43/90
//(A01N47/30, 43:90),
(A01N43/90, 33:18)

(43) Date of publication of application: 18.12.85 Bulletin 85/51

(84) Designated Contracting States: CH DE FR GB IT LI

(71) Applicant: SUMITOMO CHEMICAL COMPANY, LIMITED
15 Kitahama 5-chome Higashi-ku
Osaka-shi Osaka 541(JP)

(72) Inventor: Hashimoto, Shunichi
G-2, West Bend Apartments
Leland Mississippi 38756(US)

(72) Inventor: Yoshida, Ryo
5-19, Higashiuneno Aza Jozoyama
Kawanishi Hyogo(JP)

(74) Representative: Vossius Vossius Tauchner Heunemann Rauh
Siebertstrasse 4 P.O. Box 86 07 67
D-8000 München 86(DE)

## (54) Herbicidal composition.

(57) A herbicidal composition comprising as the essential active ingredients (a) 4-(4-chloro-2-fluoro-5-isopropoxyphenyl)-1,2-tetramethyleneurazol and (b) at least one of α,α,α-trifluoro-2,6-dinitro-N,N-dipropyl-p-toluidine, 3-(3,4-dichlorophenyl)-1,1-dimethylurea and 1,1-dimethyl-3-(3-trifluoromethylphenyl)urea.

EP 0 164 422 A1

TEL: (089) 47 4075

our ref.: S 956 EP
Case: 606861
Sumitomo Chemical Co., Ltd.
Osaka, Japan

April 4, 1984

0164422

HERBICIDAL COMPOSITION

The present invention relates to a herbicidal composition. More particularly, it relates to a herbicidal composition comprising as the essential active ingredient (a) 4-(4-chloro-2-fluoro-5-isopropoxyphenyl)-1,2-tetramethyleneurazol (hereinafter referred to as "Compound (I)") of the formula:

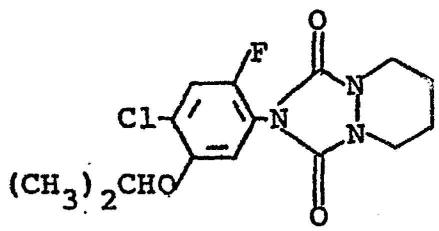

(I)

and (b) at least one of α,α,α-trifluoro-2,6-dinitro-N,N-dipropyl-p-toluidine (hereinafter referred to as "trifluralin"), 3-(3,4-dichlorophenyl)-1,1-dimethylurea (hereinafter referred to as "diuron") and 1,1-dimethyl-3-(3-trifluoromethylphenyl)urea (hereinafter referred to as "fluometuron"), which exerts a highly enhanced herbicidal activity against various weeds, particularly Graminaceous weeds, without any material phytotoxicity to cotton.

In recent years, a great number of chemicals having herbicidal activities were used in order to exterminate or control the undesired vegetation of weeds. However, there are many different kinds of weeds and, in consequence, the germination thereof as well as the stages of growth differ from each other. The herbicidal effects of conventional herbicidal agents are thus quite restricted in general. In

view of this situation, there has been a great demand for a herbicidal agent which exerts a strong herbicidal activity against a wide variety of weeds without any material phytotoxicity to crop plants.

Compound (I) is known to exert a herbicidal activity against various weeds, particularly broad-leaved weeds and Graminaceous weeds (cf. EP-A-0075267). However, its herbicidal activity against Graminaceous weeds is sometimes not sufficient when applied in small doses or at low concentrations. While its application in a large doses or at high concentrations may result in a sufficient herbicidal activity against Graminaceous weeds, a phytotoxicity to cotton may simultaneously develop.

Extensive studies have been made in order to improve said drawbacks as seen on Compound (I). As a result, it has now been found that the use of (a) Compound (I) and (b) at least one of trifluralin, diuron and fluometuron in combination can eliminate said drawbacks and exert a satisfactory herbicidal activity on Graminaceous weeds or broad-leaved weeds, particularly on the former, in the cotton field without any material chemical injury to cotton. Trifluralin, diuron and fluometuron are all well known as herbicides (cf. The Pesticide Mannual, 6th Ed., pages 224, 275 and 537 (1979); Herbicidal Handbook, 5th Ed., pages 203, 238 and 470 (1983)).

Besides, in comparison with their individual or sole use, their combined use produces a synergistic effect;

i.e. the equal herbicidal effect can be achieved at smaller doses or lower concentrations of the active ingredients.

The composition according to the invention can exterminate or control a variety of weeds belonging to cotyledonous and dicotyledonous weeds, of which typical examples are as follows: common lambsquarters (Chenopodium album), redroot pigweed (Amaranthus retroflexus), smartweed (Polygonum sp.), chickweed (Stellaria media), common purslane (Portulaca oleracea), cocklebur (Xanthium strumarium), jimsonweed (Datura stramonium), velvetleaf (Abutilon theophrasti), tall morningglory (Ipomoea purpurea), hemp sesbania (Sesbania exaltata), prickly sida (Sida spinosa), black nightshade (Solanum nigrum), green foxtail (Setaria viridis), large crabgrass (Digitaria sanguinalis), annual bluegrass (Poa annua), goosegrass (Eleusine indica), barnyardgrass (Echinochloa crus-galli), johnsongrass (Sorghum halepense), purple nutsedge (Cyperus rotundus), yellow nutsedge (Cyperus esculentus), etc.

The composition of the invention may contain from 1 to 95 % by weight, preferably from 5 to 80 % by weight of the active ingredients, i.e. the components (a) and (b). The weight proportion of the components (a) and (b) in the composition may vary within a broad range, usually from 1 : 0.5 to 1 : 30. When the component (b) is trifluralin, the weight proportion of the components (a) and (b) is normally 1 : 1 - 30. When the component (b) is diuron and/or fluometuron, the normal weight proportion is 1 : 1 - 30. The composition may additionally contain a solid or

liquid carrier or diluent. Any surface active or auxiliary agent may also be contained therein. Thus, the composition may be formulated in any conventional preparation form such as emulsifiable concentrate, wettable powder, suspension or granules.

As solid carrier or diluent, there may be used kaolin clay, attapulgite clay, bentonite, terra alba, pyrophyllite, talc, diatomaceous earth, calcite, wallnut-shell powder, urea, ammonium sulfate, synthetic hydrated silicon dioxide, etc. Examples of the liquid carrier or diluent are aromatic hydrocarbons (e.g. xylene, methylnaphthalene), alcohols (e.g. isopropanol, methylene glycol, cellosolve), ketones (e.g. acetone, cyclohexanone, isophorone), vegetable oils (e.g. soybean oil, cotton-seed oil), dimethylsulfoxide, acetonitrile, water, etc.

The surface active agent used for emulsification, dispersion or spreading may be any of the anionic and nonionic type of agents. Examples of the surface active agent include alkylsulfates, alkylarylsulfonates, dialkylsulfosuccinates, phosphates of polyoxyethylenealkylaryl ethers, polyoxyethylene alkyl ethers, polyoxyethylene alkylaryl ethers, polyoxyethylene polyoxypropylene block copolymers, sorbitan fatty acid esters, polyoxyethylene sorbitan fatty acid esters, etc. Examples of the auxiliary agents include ligninsulfonates, sodium alginate, polyvinyl alcohol, gum arabic, CMC (carboxymethyl cellulose), PAP (isopropyl acid phosphate), etc.

Practical embodiments of the composition according

to the invention are illustratively shown in the following Formulation Examples wherein part(s) are by weight.

Formulation Example 1

Nine parts of Compound (I), 41 parts of trifluralin, 3 parts of calcium ligninsulfonate, 2 parts of sodium laurylsulfate and 45 parts of synthetic hydrated silicon dioxide are well mixed while being powdered to obtain a wettable powder.

Formulation Example 2

Six parts of Compound (I), 44 parts of diuron, 3 parts of calcium ligninsulfonate, 2 parts of sodium laurylsulfate and 45 parts of synthetic hydrated silicon dioxide are well mixed while being powdered to obtain a wettable powder.

Formulation Example 3

Two parts of Compound (I), 8 parts of trifluralin, 14 parts of polyoxyethylene styrylphenyl ether, 6 parts of calcium dodecylbenzenesulfonate and 70 parts of xylene are well mixed while being powdered to obtain an emulsifiable concentrate.

Formulation Example 4

One part of Compound (I), 9 parts of fluometuron, 14 parts of polyoxyethylene styrylphenyl ether, 6 parts of calcium dodecylbenzenesulfonate and 70 parts of xylene are well mixed while being powdered to obtain an emulsifiable concentrate.

Formulation Example 5

0.4 Part of Compound (I), 1.6 parts of trifluralin, 1 part of synthetic hydrated silicon dioxide, 2 parts of calcium ligninsulfonate, 30 parts of bentonite and 65 parts of kaolin clay are well mixed while being pulverized. The resulting powder is admixed with water and dried to obtain a granule.

Formulation Example 6

0.2 Part of Compound (I), 1.8 parts of diuron, 1 part of synthetic hydrated silicon dioxide, 2 parts of calcium ligninsulfonate, 30 parts of bentonite and 65 parts of kaolin clay are well mixed while being pulverized. The resulting powder is admixed with water and dried to obtain a granule.

Formulation Example 7

Four parts of Compound (I), 21 parts of trifluralin, 3 parts of polyoxyethylene sorbitan monooleate, 3 parts of CMC and 69 parts of water are well mixed and pulverized until the particle size becomes less than 5 microns to obtain a suspension.

Formulation Example 8

Three parts of Compound (I), 22 parts of fluometuron, 3 parts of polyoxyethylene sorbitan monooleate, 3 parts of CMC and 69 parts of water are well mixed and pulverized until the particle size becomes less than 5 microns to obtain a suspension.

The composition thus prepared may be applied as such to the weeds. Alternatively, it may be applied by diluting with water. The application is effected by such a means as foliar or soil treatment and, in case of the

latter, the composition is sprayed to the soil surface, if necessary, followed by mixing up with the soil, or perfused into the soil. In order to improve its activity as herbicide, the herbicidal composition of the invention may be also used with other herbicides. Besides, it may be used in combination with insecticides, acaricides, nematocides, fungicides, plant growth regulators, fertilizers, soil improvers, etc.

The dosage of the active ingredients may vary depending on prevailing weather conditions, soil involved, preparation form used, mixing proportion of each active ingredient, crop and weed species, etc. In general, however, the total amount of Compound (I) and trifluralin is favored to be within a range of 2.5 to 25 grams per are, preferably 3.5 to 16 grams, and the total amount of Compound (I) and diuron and/or fluometuron is favored to be within a range of 5.5 to 40 grams per are, preferably 7 to 28 grams. In case of the composition being formulated into an emulsifiable concentrate, wettable powder or suspension, it may be diluted with water and applied over the top at a volume of 1 to 10 liters per are to the foliage of the crop plants or weeds which germinate or have germinated. The dilution may include, in addition to the above mentioned surface active agent, any spreading or auxiliary agent such as polyoxyethylene resin acid esters, ligninsulfonates, abietic acid, dinaphthylmethanedisulfonates, paraffin and the like. The composition being formulated into granules is generally applied as such.

The practical herbicidal activity of the composition of the invention will be explained in further detail with reference to the following Test Examples wherein the growth controlling percentage (%) was determined by weighing the aerial parts of the test plants (fresh weight) and making calculation according to the following equation:

$$\text{Growth controlling percentage (\%)} = \left(1 - \frac{\text{Fresh weight of test plant in treated plot}}{\text{Fresh weight of test plant in untreated plot}}\right) \times 100$$

Test Example 1

The seeds of tall morningglory were sowed in a cylindrical pot (diameter, 10 cm; length, 10 cm) filled with field soil and covered therewith. A designed amount of the composition in the form of an emulsifiable concentrate powder formulated in accordance with Formulation Example 3 was diluted with water and sprayed to the soil surface at a spray volume of 10 liters per are by the aid of a small hand sprayer, followed by mixing up of the soil to the depth of 3 cm. After 20 days' cultivation in a greenhouse, the growth controlling percentage was observed. The results are shown in Table 1.

Table 1

| Compound (I) (g/a) | | Growth controlling percentage (%) | | | | | |
|---|---|---|---|---|---|---|---|
| | | 0 | 0.5 | 1 | 1.5 | 2 | 4 |
| Trifluralin (g/a) | 0 | 0 | 20 | 35 | 44 | 74 | 96 |
| | 2 | 5 | 49 | 65 | 71 | 96 | 100 |
| | 4 | 11 | 70 | 87 | 92 | 100 | 100 |
| | 8 | 34 | 88 | 95 | 100 | 100 | 100 |
| | 16 | 82 | 100 | 100 | 100 | 100 | 100 |

Test Example 2

The seeds of johnsongrass were sowed in a cylindrical pot (diameter, 10 cm; length, 10 cm) filled with field soil and covered therewith. A designed amount of the composition in the form of an emulsifiable concentrate powder formulated in accordance with Formulation Example 4 was diluted with water and sprayed to the soil surface at a spray volume of 10 liters per are by the aid of a small hand sprayer. After 20 days' cultivation in a greenhouse, the growth controlling percentage was observed. The results are shown in Table 2.

Table 2

| Compound (I) (g/a) | | Growth controlling percentage (%) | | | | | |
|---|---|---|---|---|---|---|---|
| | | 0 | 1 | 1.5 | 2 | 3 | 4 |
| Diuron (g/a) | 0 | 0 | 15 | 31 | 54 | 68 | 83 |
| | 5 | 2 | 46 | 67 | 76 | 88 | 100 |
| | 10 | 11 | 80 | 86 | 92 | 97 | 100 |
| | 15 | 42 | 87 | 98 | 100 | 100 | 100 |
| | 20 | 56 | 94 | 100 | 100 | 100 | 100 |
| | 40 | 84 | 100 | 100 | 100 | 100 | 100 |
| Fluo-meturon (g/a) | 0 | 0 | 15 | 31 | 54 | 68 | 83 |
| | 5 | 4 | 43 | 61 | 75 | 85 | 100 |
| | 10 | 12 | 79 | 86 | 91 | 98 | 100 |
| | 15 | 40 | 84 | 95 | 100 | 100 | 100 |
| | 20 | 55 | 92 | 100 | 100 | 100 | 100 |
| | 40 | 82 | 100 | 100 | 100 | 100 | 100 |

Test Example 3

Seeds of barnyardgrass, prickly sida, velvetleaf and cotton were sowed in a vat (33 x 23 x 11 cm) filled with field soil and covered therewith at a depth of 1 to 2 cm. A designed amount of the composition in the form of an emulsifiable concentrate formulated in accordance with Formulation Example 3 was diluted with water and sprayed to the soil surface at a spray volume of 10 liters per are by the aid of a small hand sprayer. Twenty days' cultivation thereafter in a greenhouse, the growth controlling percentage as well as the phytotoxicity to cotton, the latter being made

visually, was observed. The results are shown in Table 3.

Table 3

| | Dosage (g/a) | Growth controlling percentage (%) | | | Phyto-toxicity |
|---|---|---|---|---|---|
| | | Barn-yard-grass | Prickly sida | Velvet-leaf | Cotton |
| Compound (I) | 1 | 24 | 96 | 97 | None |
| Trifluralin | 5 | 97 | 3 | 0 | None |
| Compound (I) + Trifluralin | 1 + 5 | 100 | 100 | 100 | None |
| Untreated | - | 0 | 0 | 0 | None |

Test Example 4

Seeds of barnyardgrass, prickly sida, velvetleaf and cotton were sowed in a vat (33 x 23 x 11 cm) filled with field soil and covered therewith at a depth of 1 to 2 cm. A designed amount of the composition in the form of an emulsifiable concentrate formulated in accordance with Formulation Example 4 was diluted with water and sprayed to the soil surface at a spray volume of 10 liters per are by the aid of a small hand sprayer. Twenty days' cultivation thereafter in a greenhouse, the growth controlling percentage as well as the phytotoxicity to cotton, the latter being made visually, was observed. The results are shown in Table 4.

Table 4

| | Dosage (g/a) | Growth controlling percentage (%) | | | Phyto-toxicity |
|---|---|---|---|---|---|
| | | Barn-yard-grass | Prickly sida | Velvet-leaf | Cotton |
| Compound (I) | 1 | 24 | 96 | 97 | None |
| Diuron | 10 | 0 | 2 | 12 | None |
| Compound (I) + Diuron | 1 + 10 | 93 | 100 | 100 | None |
| Fluometuron | 10 | 12 | 4 | 14 | None |
| Compound (I) + Fluometuron | 1 + 10 | 97 | 100 | 100 | None |
| Untreated | – | 0 | 0 | 0 | None |

What is claimed is:

1. A herbicidal composition which comprises as the essential active ingredients (a) 4-(4-chloro-2-fluoro-5-isopropoxyphenyl)-1,2-tetramethyleneurazol and (b) at least one of α,α,α-trifluoro-2,6-dinitro-N,N-dipropyl-p-toluidine, 3-(3,4-dichlorophenyl)-1,1-dimethylurea and 1,1-dimethyl-3-(3-trifluoromethylphenyl)urea, and an inert carrier or diluent.

2. The composition according to claim 1, wherein the weight proportion of 4-(4-chloro-2-fluoro-5-isopropoxyphenyl)-1,2-tetramethyleneurazol as the component (a) and α,α,α-trifluoro-2,6-dinitro-N,N-dipropyl-p-toluidine as the component (b) is 1 : 1 - 30.

3. The composition according to claim 1, wherein the weight proportion of 4-(4-chloro-2-fluoro-5-isopropoxyphenyl)-1,2-tetramethyleneurazol as the component (a) and 3-(3,4-dichlorophenyl)-1,1-dimethylurea and/or 1,1-dimethyl-3-(3-trifluoromethylpheny)urea as the component (b) is 1 : 1 - 30.

4. The composition according to claim 1, wherein the content of the active ingredients is from 1 to 95 % by weight.

5. A method for controlling weeds which comprises applying a herbicidally effective amount of the composition according to claim 1 to the weeds.

6. The method according to claim 6, wherein the weeds are those germinated in the field of cotton.

7. The method according to claim 6, wherein the amount of the active ingredients which are 4-(4-chloro-2-fluoro-5-isopropoxyphenyl)-1,2-tetramethyleneurazol as the component (a) and α,α,α-trifluoro-2,6-dinitro-N,N-dipropyl-p-toluidine as the component (b) to be applied is from 2.5 to 25 grams per are.

8. A method according to claim 6, wherein the amount of the active ingredients which are 4-(4-chloro-2-fluoro-5-isopropoxyphenyl)-1,2-tetramethyleneurazol as the component (a) and 3-(3,4-dichlorophenyl)-1,1-dimethylurea and/or 1,1-dimethyl-3-(3-trifluoromethylpheny)urea as the component (b) to be applied is from 5.5 to 40 grams per are.

0,64422

Application number

EP 84 10 3688

European Patent Office

# EUROPEAN SEARCH REPORT

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int. Cl.4) |
| AD | EP - A - 0 075 267 (SUMITOMO)<br>* Page 30, lines 3-6 *<br>---------- | 1,2, 4-7 | A 01 N 47/30<br>43/90//<br>(A 01 N 47/30<br>43/90)<br>(A 01 N 43/90<br>33/18) |
| | | | TECHNICAL FIELDS SEARCHED (Int. Cl.4) |
| | | | A 01 N |

~~The present search report has been drawn up for all claims~~

| Place of search | Date of completion of the search | Examiner |
|---|---|---|
| The Hague | 07-01-1985 | DECORTE |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82

European Patent Office

0164422

## CLAIMS INCURRING FEES

The present European patent application comprised at the time of filing more than ten claims.

- [ ] All claims fees have been paid within the prescribed time limit. The present European search report has been drawn up for all claims.
- [ ] Only part of the claims fees have been paid within the prescribed time limit. The present European search report has been drawn up for the first ten claims and for those claims for which claims fees have been paid,

  namely claims:
- [ ] No claims fees have been paid within the prescribed time limit. The present European search report has been drawn up for the first ten claims.

## [X] LACK OF UNITY OF INVENTION

The Search Division considers that the present European patent application does not comply with the requirement of unity of invention and relates to several inventions or groups of inventions,

*namely:*

1) Claims 1,2,4-7: (a) + trifluralin
2) Claims 1,3-6,8: (a) + diuron and/or fluometuron

- [ ] All further search fees have been paid within the fixed time limit. The present European search report has been drawn up for all claims.
- [ ] Only part of the further search fees have been paid within the fixed time limit. The present European search report has been drawn up for those parts of the European patent application which relate to the inventions in respect of which search fees have been paid,

  namely claims:
- [x] None of the further search fees has been paid within the fixed time limit. The present European search report has been drawn up for those parts of the European patent application which relate to the invention first mentioned in the claims,

  namely claims: 1,2,4-7